# EUROPÄISCHE PATENTANMELDUNG

(11) **EP 3 636 687 A1**
(43) Veröffentlichungstag der Anmeldung: **15.04.2020**
(21) Anmeldenummer: 18200018.2
(22) Anmeldetag: 12.10.2018
(51) Int. Cl.: C08G 18/80, C09D 175/04, C08G 18/28, C08G 18/42, C09J 175/04, C08G 18/34

(54) **THERMISCH LÖSBARE REAKTIVKLEBSTOFFE**

(71) Anmelder: Evonik Operations GmbH, 45128 Essen (DE)
(72) Erfinder: KOLB, Nicolai, 45665 Recklinghausen (DE); BRENNER, Gabriele, 48249 Dülmen (DE); SCHLEIMER, Bernhard, 45770 Marl (DE)
(74) Vertreter: Evonik Patent Association

(57) **Zusammenfassung**

Die vorliegende Erfindung betrifft eine Zusammensetzung, enthaltend ein Polymer der Formel (I),

Q-(O-C(O)-CR'R"-C(O)-R¹)ₓ (I)

mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren, x größer-gleich 2, R¹ = R² oder O-R³, R² = Kohlenwasserstoffrest, der mit Halogenatomen substituiert sein kann, mit 1 bis 10 Kohlenstoffatomen, R³ = Kohlenwasserstoffrest, der mit Halogenatomen substituiert sein kann, mit 1 bis 10 Kohlenstoffatomen, oder Polymerrest, R' = -H, Kohlenwasserstoffrest, der mit Halogenatomen substituiert sein kann, mit 1 bis 10 Kohlenstoffatomen, oder ein Rest der Formel (II),

-C(O)-NH-Q' (II)

mit
Q' = organischer Rest, der auch ein oder mehrere Silizium-Atome aufweisen kann, R" = -H oder ein Rest der Formel (II), mit der Maßgabe, dass wenn keiner der Reste R' und R" ein Rest der Formel (II) ist, mindestens einer der Reste R' oder R" -H ist, ein Verfahren zu Herstellung der Zusammensetzung sowie die Verwendung der Zusammensetzung zum Verkleben von Substraten und in sowie als Kleb-/ Dichtstoffe(n) und Beschichtungsmaterial.

## Beschreibung

Die vorliegende Erfindung betrifft eine Zusammensetzung, enthaltend ein Polymer der Formel (I),

Q-(O-C(O)-CR'R"-C(O)-R¹)ₓ (I)

mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren, x größer-gleich 1, R¹ = R² oder O-R³, R² = Kohlenwasserstoffrest, der mit Halogenatomen substituiert sein kann, mit 1 bis 10 Kohlenstoffatomen, R³ = Kohlenwasserstoffrest, der mit Halogenatomen substituiert sein kann, mit 1 bis 10 Kohlenstoffatomen, oder Polymerrest, R' = -H, Kohlenwasserstoffrest, der mit Halogenatomen substituiert sein kann, mit 1 bis 10 Kohlenstoffatomen, oder ein Rest der Formel (II),

-C(O)-NH-Q' (II)

mit
Q' = organischer Rest, der auch ein oder mehrere Silizium-Atome aufweisen kann, R" = -H oder ein Rest der Formel (II), mit der Maßgabe, dass wenn keiner der Reste R' und R" ein Rest der Formel (II) ist, mindestens einer der Reste R' oder R" -H ist, ein Verfahren zur Herstellung der Zusammensetzung sowie die Verwendung der Zusammensetzung zum Verkleben von Substraten und in sowie als Kleb-/ Dichtstoffe(n) und Beschichtungsmaterial.

Reaktive Polyurethanklebstoffe - sowohl feuchtigkeitshärtende 1-Komponenten als auch 2-Komponenten Klebstoffe - werden in vielen industriellen Verfahren genutzt, wo besonders hohe Anforderungen an die Verklebung gestellt werden. Insbesondere bzgl. der thermischen Stabilität (Wärmestandfestigkeit) zeigen vernetzte Polyurethanklebstoffe hervorragende Eigenschaften.

Eine aktuelle legislative Vorgabe ist allerdings, dass gefügte Bauteile (geklebte Produkte) nach dem Lebenszyklus wieder recycelt werden oder für Reparaturzwecke, ohne gravierende Beschädigung der Bauteile, getrennt werden können - beispielsweise elektronische Geräte wie Mobiltelefone oder Displays. Für ein solches Recycling oder Trennen müsste der Klebstoff "auf Befehl" lösbar sein (De-Bonding on Demand, abgekürzt DBD).
Ein üblicher Ansatz für De-Bonding on Demand ist der Eintrag von Temperatur, wodurch die Adhäsion und/oder die Kohäsion beeinflusst werden. Hier gibt es diverse Ansätze, beispielsweise das Zufügen eines nicht-reaktiv eingebauten Harzes in die Klebstoffformulierung, welches bei Temperaturen über dem Erweichungspunkt den Klebstoff "aufweicht" und entsprechend die Kohäsion verringert (WO2016/000222). Dieser Ansatz ist allerdings nachteilig, da die nicht-reaktiv eingebauten Polymere üblicherweise zu einer geringeren Kohäsion des Klebstoffs auch bei niedrigeren Temperaturen während der Nutzungsphase/-dauer führen. Sie können die Chemikalienbeständigkeit beeinträchtigen, herausgewaschen werden oder zu unerwünschter Migration führen.

In Macromolecules, 2018, 51 (3), Seiten 660 - 669 wird das Umsetzungsprodukt eines Acetoacetoxy-Acrylesters mit einem geblockten Isocyanat beschrieben, um einen thermolabilen, strahlenvernetzbaren Crosslinker zu erhalten, der strahlenhärtende Klebstoff auf Befehl (durch Einwirkung von Wärme) lösbar macht. Da hier allerdings keine freien Isocyanatgruppen mehr vorhanden sind, ist die Verwendung dieser Technologie für reaktive feuchtigkeitshärtende PU-Klebstoffe nicht möglich.

Dass auch Malonat-haltige Polyester mit Isocyanaten reagieren können, um Polyester mit thermisch labilen Bindungen zu erhalten, wird beispielsweise in der US 4,006,122 beschrieben. Eine Verwendung solcher Polymere in Klebstoffen findet hier allerdings keine Erwähnung. Ebenso wird keine Härtung der Isocyanate über Feuchtigkeit erwähnt, die für reaktive feuchtigkeitshärtende PU-Klebstoffe essentiell ist.

Aufgabe der vorliegenden Erfindung war entsprechend die Bereitstellung von reaktiven (Polyurethan-basierten) Schmelzklebstoffen mit einer de-bonding on demand Funktion.

Überraschenderweise wurde gefunden, dass eine Zusammensetzung, enthaltend ein Polymer der Formel

Q-(O-C(O)-CR'R"-C(O)-R¹)ₓ (I)

mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren, x größer-gleich 1, R¹ = R² oder O-R³, R² = Kohlenwasserstoffrest, der mit Halogenatomen substituiert sein kann, mit 1 bis 10 Kohlenstoffatomen, R³ = Kohlenwasserstoffrest, der mit Halogenatomen substituiert sein kann, mit 1 bis 10 Kohlenstoffatomen, oder Polymerrest, R' = -H, Kohlenwasserstoffrest, der mit Halogenatomen substituiert sein kann, mit 1 bis 10 Kohlenstoffatomen, oder ein Rest der Formel (II),

-C(O)-NH-Q' (II)

mit
Q' = organischer Rest, der auch ein oder mehrere Silizium-Atome aufweisen kann, R" = -H oder ein Rest der Formel (II), mit der Maßgabe, dass wenn keiner der Reste R' und R" ein Rest der Formel (II) ist, mindestens einer der Reste R' oder R" -H ist, diese Aufgabe löst.

Gegenstand der vorliegenden Erfindung sind deshalb Zusammensetzungen wie in den Ansprüchen sowie in der nachfolgenden Beschreibung definiert.

Ebenfalls Gegenstand der vorliegenden Erfindung ist ein Verfahren zur Herstellung der erfindungsgemäßen Zusammensetzungen wie in den Ansprüchen sowie in der nachfolgenden Beschreibung definiert.

Außerdem ist Gegenstand der vorliegenden Erfindung die Verwendung der erfindungsgemäßen Zusammensetzungen zur Verklebung von Substraten und in sowie als Kleb-/ Dichtstoffe(n) und Beschichtungsmaterial.

Die erfindungsgemäßen Zusammensetzungen haben den Vorteil, dass aus Ihnen erzeugte Klebstoffformulierungen zu Verklebungen führen, die durch Einwirkung von Wärme, insbesondere von Temperaturen kleiner 200 °C lösbar sind.

Weiterhin haben die erfindungsgemäßen Zusammensetzungen den Vorteil, dass die thermisch labilen Bindungsstellen im Polymernetzwerk reaktiv eingebaut sind, und somit kein Verlust der mechanischen Eigenschaften (bsp. Kohäsion) im ausgehärteten Klebstoff in der Nutzungsphase erfolgt, wie es bei der Zugabe von nicht-reaktiven Additiven der Fall wäre.

Die erfindungsgemäßen Zusammensetzungen, das erfindungsgemäße Verfahren zu deren Herstellung und die erfindungsgemäße Verwendung der Zusammensetzungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Die erfindungsgemäßen Zusammensetzungen zeichnen sich dadurch aus, dass sie ein Polymer der Formel

Q-(O-C(O)-CR'R"-C(O)-R¹)ₓ (I)

enthalten mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren,
x größer-gleich 1, vorzugsweise 1 bis 100, bevorzugt 2 bis 20, besonders bevorzugt 3 bis 10,
R¹ = R² oder O-R³,
R² = Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, R³ = Kohlenwasserstoffrest, der mit Halogenatomen substituiert sein kann, mit 1 bis 10 Kohlenstoffatomen, vorzugsweise mit 1 bis 7 Kohlenstoffatomen und bevorzugt mit 1 bis 4 Kohlenstoffatomen, oder Polymerrest, vorzugsweise ausgewählt aus Polyester- oder Polyolefinrest, bevorzugt ein Polymerrest, der keine Bausteine enthält, die aus der Verwendung von (Meth)acrylsäure-Einheiten aufweisenden Molekülen als Monomere resultieren,
R' = -H, Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, oder ein Rest der Formel (II),

   -C(O)-NH-Q' (II)

   mit
   Q' = organischer Rest, der auch ein oder mehrere Silizium-Atome aufweisen kann, vorzugsweise organischer Rest, der ein oder mehrere -C(O)-NH-Bausteine, -N=C=O Reste oder Reste der Formel (V) aufweist, und bevorzugt Polyester- und/oder Polyolefinrest, der ein oder mehrere -C(O)-NH-Bausteine oder -N=C=O Reste oder Reste der Formel (V) aufweist, 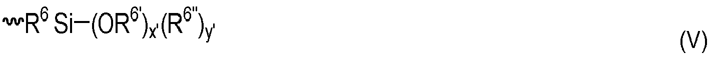 mit R⁶, gleich Kohlenwasserstoffrest, der auch Stickstoff, Schwefel und/oder Sauerstoff aufweisen kann, bevorzugt Kohlenwasserstoffrest der kein Stickstoff, Schwefel oder Sauerstoff aufweist, R^{6'} und R^{6"} gleiche oder verschiedene, gesättigte Kohlenwasserstoffreste, vorzugsweise lineare Kohlenwasserstoffreste, vorzugsweise mit 1 bis 18 Kohlenstoffatomen, bevorzugt mit 1 bis 3 Kohlenstoffatomen, und x' = 0 bis 3, y' = 0 bis 3, mit der Maßgabe, dass x' + y' = 3 ist, und wobei die geschwungene Linie eine kovalenten Bindung zum Stickstoff darstellt, wobei x' >= 2 und y' <= 1 bevorzugt und x' = 3 und y' = 0 besonders bevorzugt ist,
R" = -H oder ein Rest der Formel (II),
   mit der Maßgabe, dass wenn keiner der Reste R' und R" ein Rest der Formel (II) ist, mindestens einer der Reste R' oder R" -H ist.

In dem Polymer der Formel (I) ist Q vorzugsweise ein Polyesterrest, der bevorzugt auf Di- und/oder Polysäuren und Di- und/oder Polyolen basiert. Bevorzugt ist Q ein Polyesterrest, der auf Disäuren und Diolen basiert.

Polymere der Formel bei denen R' und R" gleich -H ist, können durch Umsetzung von OH-terminierten Polyestern oder OH-terminierten Polyolefinen mit Malonsäure, Malonsäuremonoester oder Malonsäurediestern, vorzugsweise Marlonsäurediemethyl- oder Malonsäuredieethylestern oder mit beta-Ketoestern der Formel (IV)

R⁴-O-C(O)-CR'R"-C(O)-R⁵ (IV)

mit R' und R" = -H und R⁴ und R⁵ gleiche oder verschiedene Kohlenwasserstoffreste, die mit Halogenatomen substituiert sein können, mit 1 bis 10 Kohlenstoffatomen, vorzugsweise mit 1 bis 7 Kohlenstoffatomen und bevorzugt mit 1 bis 4 Kohlenstoffatomen, erhalten werden. Besonders bevorzugte Verbindungen der Formel (IV) sind Methyl- oder Ethyl-2-acetoacetat.

Bevorzugt erfolgt die Umsetzung der OH-terminierten Polyester oder OH-terminierten Polyolefine mit Malonsäure, Malonsäuremonoester oder Malonsäurediestern, vorzugsweise Marlonsäurediemethyl- oder Malonsäuredieethylestern oder mit beta-Ketoestern der Formel (IV)

R⁴-O-C(O)-CR'R"-C(O)-R⁵ (IV)

mit R' und R" = -H und R⁴ und R⁵ gleiche oder verschiedene Kohlenwasserstoffreste, die mit Halogenatomen substituiert sein können, mit 1 bis 10 Kohlenstoffatomen, vorzugsweise mit 1 bis 7 Kohlenstoffatomen und bevorzugt mit 1 bis 4 Kohlenstoffatomen, vorzugsweise katalysiert, bevorzugt mit Titan- oder Zinn-Katalysatoren. Bevorzugt wird als Titan aufweisender Katalysator eine organische Titan(IV)-verbindung, beispielsweise Titan(IV)-alkoholat, Titan(IV)-carboxylat oder Titan(IV)-acetylacetonat eingesetzt. Bevorzugt handelt es sich bei der Titan(IV)-verbindung um ein Titan(IV)-alkoholat, wobei es vorteilhaft sein kann, wenn es sich bei dem Liganden um ein zweizähniges Diol handelt. Beispiele bevorzugter Titan(IV)-verbindungen sind Titantetramethanolat, Titantetraethanloat, Titantetrapropylat, Titantetraisopropylat, Titantetra-n-butylat, Titantetra-t-butylat, Titantetraphenylat, Titanoxidacetylacetonat, Titanacetylacetonat sowie Titandialkoholate basierend auf Diolen.

Als OH-funktionalisierte, bevorzugt OH-terminierte Polyester oder OH-funktionalisierte, bevorzugt OH-terminierte Polyolefine können alle bekannten entsprechenden Polymere eingesetzt werden.

Als OH-funktionalisierte, bevorzugt OH-terminierte Polyester werden vorzugsweise solche mit einer Funktionalität von mindestens 1, vorzugsweise 1 bis 100, bevorzugt 2 bis 20 und besonders bevorzugt 3 bis 10 eingesetzt, die vorzugsweise mindestens ein Di- oder Polyol und mindestens eine Di- oder Polycarbonsäure enthalten. Im Hinblick auf die Polyole und Polycarbonsäuren gibt es grundsätzlich keine Einschränkungen und es können grundsätzlich alle Mischungsverhältnisse auftreten. Die Auswahl richtet sich nach den gewünschten physikalischen Eigenschaften des Polyesters. Diese können bei Raumtemperatur fest und amorph, flüssig und amorph oder/und (teil-)kristallin sein.

Unter Polycarbonsäuren sind Verbindungen zu verstehen, die mehr als eine und bevorzugt zwei oder mehr Carboxylgruppen tragen. Unter Carboxyfunktionalitäten werden im Sinne der vorliegenden Erfindung auch deren Derivate, beispielsweise Ester oder Anhydride, verstanden.

Bei den Polycarbonsäuren kann es sich vorzugsweise um aromatische oder um gesättigte oder ungesättigte aliphatische oder gesättigte oder ungesättigte cycloaliphatische Di- oder Polycarbonsäuren handeln. Bevorzugt werden Dicarbonsäuren eingesetzt. Beispiele für geeignete aromatische Di- oder Polycarbonsäuren und deren Derivate sind Verbindungen wie Dimethylterephthalat, Terephthalsäure, Isophthalsäure, Naphthalindicarbonsäure und Phthalsäureanhydrid. Beispiele linearer aliphatischer Di- oder Polycarbonsäuren umfassen Oxalsäure, Dimethyloxalat, Malonsäure, Dimethylmalonat, Bernsteinsäure, Dimethylsuccinat, Glutarsäure, Dimethylglutarat, 3,3-Dimethylglutarsäure, Adipinsäure, Adipinsäuredimethylester, Pimelinsäure, Korksäure, Azelainsäure, Dimethylazelat, Sebacinsäure, Dimethylsebacat, Undecandicarbonsäure, 1,10-Decandicarbonsäure, 1,12-Dodecandicarbonsäure, Brassylsäure, 1,14-Tetradecandicarbonsäure, 1,16-Hexadecandisäure, 1,18-Octadecandisäure, Dimerfettsäuren und Mischungen daraus. Beispiele ungesättigter linearer Di- und/oder Polycarbonsäuren umfassen Itaconsäure, Fumarsäure, Maleinsäure oder Maleinsäureanhydrid. Beispiele gesättigter cycloaliphatischer Di- und/oder Polycarbonsäuren umfassen Derivate von 1,4-Cyclohexandicarbonsäuren, 1,3-Cyclohexandicarbonsäuren und 1,2-Cyclohexandicarbonsäuren.

Die Art der für die Herstellung der Polyester eingesetzten Polyole ist an sich beliebig. Unter Polyolen sind Verbindungen zu verstehen, die mehr als eine und bevorzugt zwei oder mehr Hydroxylgruppen tragen. So können lineare oder verzweigte aliphatische und/oder cycloaliphatische und/oder aromatische Polyole enthalten sein.

Beispiele für geeignete Diole oder Polyole sind Ethylenglykol, Propandiol-1,2, Propandiol-1,3, Butandiol-1,4, Butandiol-1,3, Butandiol-1,2, Butandiol-2,3, Pentandiol-1,5, Hexandiol-1,6, Octandiol-1,8, Nonandiol-1,9, Dodecandiol-1,12, Neopentylglykol, Butylethylpropandiol-1,3, Methylpropandiol-1,3, Methylpentandiole, Cyclohexandimethanole, Tricylclo-[2.2.1]-decandimethanol, Isomere des Limonendimethanols, Isosorbit, Trimethylolpropan, Glycerin, 1,2,6-Hexantriol, Pentaerythrol, Polyethylenglykol, Polypropylenglykol und Mischungen daraus.
Unter aromatischen Diolen oder Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Diole oder Polyole können auch Etherdiole, d. h. Oligomere bzw. Polymere, z. B. auf Basis Ethylenglykol, Propylenglykol oder Butandiol-1,4 enthalten sein.
Bevorzugt werden bifunktionelle Diole und Dicarbonsäuren eingesetzt.

Auch Polyole oder Polycarbonsäuren mit mehr als zwei funktionellen Gruppen, wie beispielsweise Trimellitsäureanhydrid, Trimethylolpropan, Pentaerythrol oder Glycerin können eingesetzt werden. Außerdem können Lactone und Hydroxycarbonsäuren als Bestandteile des Polyesters verwendet werden.

Besonders bevorzugt ist Q ein Polyesterrest, der auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol basiert. Ganz besonders bevorzugt ist Q ein Polyesterrest, der zu mindestens 50 Gew.-% bevorzugt 75 Gew.-% und besonders bevorzugt 95 Gew.-% bezogen auf den Polyesterrest, auf den genannten Polysäuren und Polyolen, bevorzugt Adipinsäure und Hexandiol basiert.

In dem Polymer der Formel (I) ist R³ vorzugsweise ein Polyesterrest, der bevorzugt auf Di- und/oder Polysäuren und Di- und/oder Polyolen, besonders bevorzugt auf Disäuren und Diolen basiert. Bevorzugt ist R³ ein Polyesterrest, der auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol, ganz besonders bevorzugt auf Adipinsäure und Hexandiol basiert. Ganz besonders bevorzugt ist R³ ein Polyesterrest, der zu mindestens 50 Gew.-% bevorzugt 75 Gew.-% und besonders bevorzugt 95 Gew.-% bezogen auf den Polyesterrest, auf den genannten Polysäuren und Polyolen, bevorzugt auf Adipinsäure und Hexandiol basiert.

Ist Q' ein Polyesterrest, so basiert Q' vorzugsweise auf Di- und/oder Polysäuren und Di- und/oder Polyolen, bevorzugt auf Disäuren und Diolen. Besonders bevorzugt ist Q' ein Polyesterrest, der auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol, ganz besonders bevorzugt auf Adipinsäure und Hexandiol basiert. Ganz besonders bevorzugt ist Q' ein Polyesterrest, der zu mindestens 50 Gew.-%, bevorzugt 75 Gew.-% und besonders bevorzugt 95 Gew.-% bezogen auf den Polyesterrest, auf den genannten Polysäuren und Polyolen, bevorzugt auf Adipinsäure und Hexandiol basiert.

Die Synthese der Polyester erfolgt bevorzugt über eine Schmelzekondensation. Hierzu werden die vorab genannten Di- oder Polycarbonsäuren und Di- oder Polyole im Äquivalentverhältnis von Hydroxyl- zu Carboxylgruppen von 0.5 bis 1.5, bevorzugt 1.0 bis 1.3, vorgelegt und aufgeschmolzen. Die Polykondensation erfolgt in der Schmelze bei Temperaturen zwischen 150 und 280 °C innerhalb von 3 bis 30 Stunden. Dabei wird zunächst ein Großteil der freiwerdenden Wassermenge bei Normaldruck abdestilliert. Im weiteren Verlauf wird das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitan- oder -zinnverbindungen wie Tetrabutyltitanat oder Dibutylzinnoxid. Denkbar sind auch Katalysatoren, die auf anderen Metallen wie z. B. Zink oder Antimon basieren, sowie metallfreie Veresterungskatalysatoren. Weiterhin sind weitere Additive und Fahrhilfsmittel wie Antioxidantien oder Farbstabilisatoren möglich.

Die OH-terminierten Polyester weisen vorzugsweise eine Säurezahl, bestimmt nach DIN EN ISO 2114, zwischen 0 und 10 mg KOH/g, vorzugsweise 0 bis 3 mg KOH/g, insbesondere 0 bis 1 mg KOH/g auf. Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N ethanolischer Kalilauge gegen Phenolphthalein titriert.

Die OH-terminierten Polyester weisen vorzugsweise eine OH-Zahl, bestimmt nach DIN 53240-2, zwischen 1 bis 250 mg KOH/g, besonders bevorzugt zwischen 5 und 100 mg KOH/g auf.

Als OH-funktionalisiertes Polyolefin, vorzugsweise OH-terminiertes Polyolefin wird bevorzugt ein OH-funktionalisiertes Polybutadien, bevorzugt ein OH-terminiertes Polybutadien verwendet.

Das zahlenmittlere Molekulargewicht, bestimmt durch Gelpermeationschromatographie, der hydroxyterminierten Polybutadiene beträgt vorzugsweise von 500 bis 10.000 g/mol, bevorzugt von 1.000 bis 5.000 g/mol und besonders bevorzugt von 1.500 und 4.000 g/mol. OH-terminierte Polybutadien kann in einer teilweise oder vollständig hydrierten Form vorliegen. Vorzugsweise wird unhydriertes OH-funktionalisiertes Polybutadien, bevorzugt OH-terminiertes Polybutadien verwendet.

Die erfindungsgemäß eingesetzten hydroxy funktionalisierten, bevorzugt hydroxy-terminierten Polybutadiene werden vorzugsweise mittels radikalischer Polymerisation, beispielsweise durch Polymerisation von 1,3-Butadien in Anwesenheit von Wasserstoffperoxid, Wasser und einem organischen Lösungsmittel hergestellt. Geeignete Verfahren sind beispielsweise in EP 2 492 292 beschrieben.

Die im Rahmen der vorliegenden Erfindung vorzugsweise einsetzbaren Polybutadiene sind kommerziell erhältlich, beispielsweise als POLYVEST® HT von der Evonik Resource Efficiency GmbH.

Die Funktionalität der eingesetzten OH-funktionalisierten, bevorzugt OH-terminierten Polyolefine, bevorzugt Polybutadiene, welche auch anteilig oder vollständig hydriert vorliegen können, vorzugsweise aber unhydriert sind, liegt vorzugsweise im Bereich von 1,8 bis 5, bevorzugt im Bereich von 2 bis 3,5, und insbesondere bevorzugt im Bereich von 2 bis 3.

Es kann vorteilhaft sein, wenn in der erfindungsgemäßen Zusammensetzung kein Polymer der Formel (I) vorhanden ist, bei dem keiner der Reste R' und R" im Polymer der Formel (I) der Formel (II) entspricht und in der Zusammensetzung eine Verbindung der Formel (III)

O=C=N-Q' (III)

mit Q' wie oben definiert, vorzugsweise Q' ein Polyolefin- und/oder Polyester-Rest, enthalten ist. Bei einer solchen Zusammensetzung kann es sich um eine Zusammensetzung handeln, die als Vorprodukt einer Klebstoffformulierung eingesetzt werden kann.

Es kann vorteilhaft sein, wenn in der erfindungsgemäßen Zusammensetzung mindestens einer der Reste R' und R"", vorzugsweise beide Reste R' und R" im Polymer der Formel (I) der Formel (II) entspricht und in der Zusammensetzung zusätzlich eine Verbindung der Formel (III)

O=C=N-Q' (III)

mit Q' wie oben definiert, vorzugsweise mit Q' ein Polyolefin- und/oder Polyester-Rest, enthalten ist. Bei einer solchen Zusammensetzung kann es sich um eine Zusammensetzung handeln, die direkt als Klebstoffformulierung eingesetzt werden kann.
Auch kann es vorteilhaft sein, wenn in der erfindungsgemäßen Zusammensetzung mindestens einer der Reste R' und R", vorzugsweise beide Reste R' und R" im Polymer der Formel (I) der Formel (II) entspricht und in der Zusammensetzung keine Verbindung der Formel (III)

O=C=N-Q' (III)

mit Q' wie oben definiert, vorzugsweise mit Q' ein Polyolefin- und/oder Polyester-Rest, enthalten ist. Bei einer solchen Zusammensetzung kann es sich um eine Zusammensetzung handeln, die direkt als Klebstoffformulierung eingesetzt werden kann oder eine ausgehärtete Klebstoffformulierung (Verklebung) ist.

Polymere der Formel bei denen mindestens einer der Reste R' und R", vorzugsweise beide Reste R' und R" im Polymer der Formel (I) der Formel (II) entsprechen, können durch Umsetzung von Polymeren der Formel bei denen mindestens einer oder vorzugsweise beide der Reste R' und R" gleich -H sind, mit einer Verbindung der Formel (III) erhalten werden. Bevorzugt einsetzbare Verbindungen der Formel (III) können z.B. durch Umsetzung von OH-terminierten Polyestern oder OH-terminierten Polyolefinen mit einer Di- oder Polyisocyanatverbindung, bevorzugt Diisocyanatverbindung erhalten werden. Die Umsetzung der OH-modifizierten Polymere mit Polyisocyanaten kann wie im Stand der Technik, so z. B. in WO2016139144, WO2016034394 oder WO2005090428, beschrieben erfolgen.

Als OH-terminierte Polyester oder OH-terminierte Polyolefine werden vorzugsweise die oben beschrieben eingesetzt.

Geeignete Isocyanatverbindung sind ist vorzugsweise 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat oder Mischungen daraus, bevorzugt 4,4'-Diphenylmethandiisocyanat oder eine Mischung aus 4,4'-Diphenylmethandiisocyanat und 2,4'-Diphenylmethandiisocyanat.

Neben den Polymeren der Formel (I) und optional den Verbindungen der Formel (III), können die Zusammensetzungen weitere für Klebstoffformulierungen übliche Hilfsstoffe aufweisen, wie z.B. nicht OH-funktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel. Der Anteil an Hilfsstoffen an der erfindungsgemäßen Zusammensetzung kann bis zu 50 Gew.-%, vorzugsweise von 0,1 bis 25 Gew.-% betragen.

Es kann vorteilhaft sein, wenn die erfindungsgemäße Zusammensetzung Zink, vorzugsweise in Form von Zink-Ionen oder Zink-Verbindungen enthält. Bevorzugt enthält die erfindungsgemäße Zusammensetzung Zn(acac)₂. Der Anteil an Zink in der erfindungsgemäßen Zusammensetzung beträgt vorzugsweise von 0,0001 bis 1 Gew.-%, bevorzugt von 0,001 bis 0,5 Gew.-% und besonders bevorzugt von 0,01 bis 0,1 Gew.-% bezogen auf die Gesamtzusammensetzung. Durch das Vorhandensein von Zinkatomen oder -ionen, kann die Bildung und/oder das Auflösen der Bindung zwischen Isocyanat-Gruppe und dem aciden H-Atom der Malonsäureeinheit beeinflusst werden.

Es kann vorteilhaft sein, wenn die erfindungsgemäße Zusammensetzung Titan, vorzugsweise in Form von Titan-Ionen oder Titan-Verbindungen enthält. Das in der erfindungsgemäßen Zusammensetzung enthaltene Titan liegt vorzugsweise als organische Titan(IV)-verbindungen, beispielsweise Titan(IV)-alkoholat, Titan(IV)-carboxylat oder Titan(IV)-acetylacetonat vor. Bevorzugt handelt es sich bei der Titan(IV)-verbindung um ein Titan(IV)-alkoholat, wobei es vorteilhaft sein kann, wenn es sich bei dem Liganden um ein zweizähniges Diol handelt. Beispiele bevorzugter Titan(IV)-verbindungen sind Titantetramethanolat, Titantetraethanloat, Titantetrapropylat, Titantetraisopropylat, Titantetra-n-butylat, Titantetra-t-butylat, Titantetraphenylat, Titanoxidacetylacetonat, Titanacetylacetonat sowie Titandialkoholate basierend auf Diolen. Vorzugsweise liegt das Titan nicht als Verbindung vor, die einen Amino-gruppen haltigen Ligand aufweist. Besonders bevorzugt enthält die erfindungsgemäße Zusammensetzung Titan-(IV)-alkoholate, insbesondere Titan-(IV)-butanolat. Der Anteil an Titan in der erfindungsgemäßen Zusammensetzung beträgt vorzugsweise von 0,0001 bis 1 Gew.-%, bevorzugt von 0,001 bis 0,5 Gew.-% und besonders bevorzugt von 0,01 bis 0,1 Gew.-% bezogen auf die Gesamtzusammensetzung.

Bei den erfindungsgemäßen Zusammensetzungen kann es sich vorzugsweise um einkomponentige oder zweikomponentige, feuchtigkeits- oder strahlenhärtbare oder thermisch-vernetzende Polyurethanklebstoffe handeln.

Das erfindungsgemäße Verfahren zur Herstellung einer erfindungsgemäßen Zusammensetzung zeichnet sich dadurch aus, dass ein Polymer der Formel (la),

Q-(O-C(O)-CR'R"-C(O)-R¹)ₓ (la)

mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren,
x größer-gleich 2, vorzugsweise 2 bis 100, bevorzugt 3 bis 20, besonders bevorzugt 4 bis 10,
R¹ = R² oder O-R³,
R² = Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen,
R³ = Kohlenwasserstoffrest, der mit Halogenatomen substituiert sein kann, mit 1 bis 10 Kohlenstoffatomen, vorzugsweise mit 1 bis 7 Kohlenstoffatomen und bevorzugt mit 1 bis 4 Kohlenstoffatomen, oder Polymerrest, vorzugsweise ausgewählt aus Polyester- oder Polyolefinrest, bevorzugt ein Polymerrest, der keine Bausteine enthält, die aus der Verwendung von (Meth)acrylsäure-Einheiten aufweisenden Molekülen als Monomere resultieren,
R' = -H, Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, oder ein Rest der Formel (II),

   -C(O)-NH-Q' (II)

   mit Q' = organischer Rest, der auch ein oder mehrere Silizium-Atome aufweisen kann, vorzugsweise organischer Rest, der ein oder mehrere -C(O)-NH-Bausteine, -N=C=O Reste oder Reste der Formel (V) aufweist, und bevorzugt Polyester- und/oder Polyolefinrest, der ein oder mehrere -C(O)-NH-Bausteine oder -N=C=O Reste oder Reste der Formel (V) aufweist, 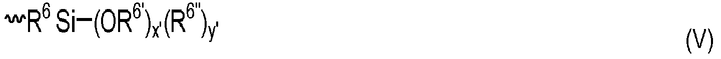 mit R⁶, gleich Kohlenwasserstoffrest, der auch Stickstoff, Schwefel und/oder Sauerstoff aufweisen kann, bevorzugt Kohlenwasserstoffrest der kein Stickstoff, Schwefel oder Sauerstoff aufweist, R^{6'} und R^{6"} gleiche oder verschiedene, gesättigte Kohlenwasserstoffreste, vorzugsweise lineare Kohlenwasserstoffreste, vorzugsweise mit 1 bis 18 Kohlenstoffatomen, bevorzugt mit 1 bis 3 Kohlenstoffatomen, und x' = 0 bis 3, y' = 0 bis 3, mit der Maßgabe, dass x' + y' = 3 ist, und wobei die geschwungene Linie eine kovalenten Bindung zum Stickstoff darstellt, wobei x' >= 2 und y' <= 1 bevorzugt und x' = 3 und y' = 0 besonders bevorzugt ist,
R" = -H oder ein Rest der Formel (II),
   mit der Maßgabe, dass mindestens einer der Reste R' und R" = -H ist,
   mit einer Verbindung der Formel (III)

      O=C=N-Q' (III)

      mit Q' wie oben definiert, vorzugsweise Q' ein Polyolefin- und/oder Polyester-Rest, vermischt wird.

Handelt es sich bei der Verbindung der Formel (III) um eine solche, bei der Q' ein Rest der Formel (V) ist, so ist diese Verbindung vorzugsweise ausgewählt aus 3-Isocyanatopropyltrimethoxysilan, 3-Isocyanatopropyltriethoxysilan, 3-Isocyanatopropyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyltriethoxysilan, 4-Isocyanatobutyltriisopropoxysilane, Isocyanatomethyltrimethoxysilan, Isocyanatomethyltriethoxysilan oder Isocyanatomethytriisopropoxysilan.

Handelt es sich bei der Verbindung der Formel (III) um eine solche, bei der Q' ein Rest der Formel (V) ist, mit R⁶ = Stickstoff, Schwefel und/oder Sauerstoff aufweisender Kohlenwasserstoffrest, so kann es sich dabei z.B. um Verbindungen handeln, die durch Umsetzung von Di- oder Polyisocyanaten mit organofunktionellen Silanen erhalten werden können. Bevorzugte organofunktionelle Silane sind z. B. Aminopropyltrimethoxysilan, Aminopropyltriethoxysilan, N-Methyl-Aminopropyltrimethoxysilan, N-Cyclohexyl-Aminopropyltrimethoxysilan, N-Phenyl-Aminopropyltrimethoxysilan Mercaptopropyltrimethoxysilan oder Mercaptotriethoxysilan.

Vorzugsweise werden jeweils so viel des Polymeren der Formel (I) und der Verbindung der Formel (III) eingesetzt werden, dass das Verhältnis von Resten R' und R", die -H sind, zu Resten O=C=N- der Verbindung (III) von 20 zu 1 bis 1 zu 20, bevorzugt von 5 zu 1 bis 1 zu 5 und besonders bevorzugt von 1 zu 1 bis 1 zu 2 beträgt.

Es kann vorteilhaft sein, wenn der Mischung Zink, vorzugsweise in Form von Zink-Ionen oder Zink-Verbindungen, bevorzugt in Form einer organischen Zink-Verbindung, bevorzugt Zn(acac)₂, als Katalysator zugesetzt wird. Vorzugsweise wird so viel Zink der Mischung zugegeben, dass der Anteil an Zink in der Mischung vorzugsweise von 0,0001 bis 1 Gew.-%, bevorzugt von 0,001 bis 0,5 Gew.-% und besonders bevorzugt von 0,01 bis 0,1 Gew.-% bezogen auf die Mischung beträgt. Durch das Vorhandensein von Zinkatomen oder -ionen, kann die Bildung und/oder das Auflösen der Bindung zwischen Isocyanat-Gruppe und dem aciden H-Atom der Malonsäureeinheit oder des beta-Ketoesters beeinflusst werden.

Das Mischen erfolgt vorzugsweise bei einer Temperatur von größer 70 °C, bevorzugt bei einer Temperatur von 85 bis 160 °C. Besonders bevorzugt wird das Mischen in dem erfindungsgemäßen Verfahren in der Schmelze durchgeführt.

Es kann vorteilhaft sein, das Mischen unter Schutzgasatmosphäre, z. B. einer Edelgas- oder Stickstoffatmosphäre, durchzuführen. Auf diese Weise können ungewollte Reaktionen vermieden werden.

Das Mischen, vorzugsweise unter Schutzgasatmosphäre, wird bevorzugt über einen Zeitraum von 0,1 bis 180 Minuten, bevorzugt von 15 bis 150 Minuten durchgeführt.

Die erfindungsgemäßen Zusammensetzungen können zur Verklebung von Substraten verwendet werden. Vorzugsweise handelt es sich bei der Verklebung um eine Verklebung, die durch eine Wärmebehandlung mit einer Temperatur von 50 bis kleiner 200 °C, bevorzugt 100 bis 190 °C, nach Aushärtung lösbar ist.

Die erfindungsgemäßen Zusammensetzungen eignen sich in besonderer Weise zur Herstellung von Verklebungen einer Vielzahl von Substraten, z. B. Kunststoffe, faserverstärkte Kunststoffe, Metalle, Holzarten, Glas, Glaskeramik, Beton, Mörtel, Ziegel, steine, Schaumstoffe, Papier, Pappe, insbesondere zur Verklebung von metallischen Substraten, Textilien und diverser Kunststoffe.

Die Art und der Umfang der Verklebung sind dabei nicht limitiert. Vorzugsweise handelt es sich bei den Verklebungen um Verklebungen in der Holz- und Möbelindustrie (beispielsweise Montageverklebung sowie die Kaschierung und Laminierung von Dekorfolien auf Faserplatten), im Automobil- und Transportbereich (beispielsweise Kaschierungen von Folien oder Textilien auf Türseitenteilen, Dachhimmel, die Sitzherstellung, Retainerverklebungen, Montageverklebungen sowie der Herstellung von Sandwichelementen), in der Elekronikindustrie, Bauindustrie (beispielsweise zur Herstellung von Panelen und Türen), in der Schuhindustrie, in der graphischen Industrie und in der Textilindustrie sowie im Fensterbau (beispielsweise zur Profilummantelung). Weiterhin eignen sich die erfindungsgemäßen Zusammensetzungen in der Verpackungsindustrie, als Dichtstoffe sowie als Beschichtungsmaterial.

Die erfindungsgemäßen Zusammensetzungen eignen sich sowohl für den Einsatz in einkomponentigen als auch in zweikomponentigen Systemen.

Bei den einkomponentigen Klebstoffen erfolgt die Herstellung der Mischung zeitlich unabhängig vom Klebstoffauftrag, üblicherweise zu einem deutlich früheren Zeitpunkt. Nach dem Auftrag des erfindungsgemäßen Klebstoffs erfolgt die Härtung beispielsweise durch Feuchtigkeit oder thermisch induzierte Reaktion der im Klebstoff enthaltenen Reaktionspartner. Bei den zweikomponentigen Klebstoffen wird die Mischung unmittelbar vor Klebstoffauftrag hergestellt.

Die erfindungsgemäßen Klebstoff-Formulierungen (Zusammensetzungen) können durch alle bekannten Methoden appliziert werden, z. B. Extruder, Raupe, Düse, Streichen, Tauchen, Spritzen, Gießen, Walzen, Sprühen, Drucken, Wischen, Waschen, Trommeln, Zentrifugieren, Pulver (elektrostatisch).

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Der Gegenstand der vorliegenden Erfindung wird in den nachfolgenden Beispielen näher erläutert, ohne dass der Gegenstand der vorliegenden Erfindung darauf beschränkt sein soll.

### Beispiele:

### Messmethoden:

### 1. Gelpermeationschromatographie

Das zahlenmittlere und das gewichtsmittlere Molekulargewicht der im Rahmen der vorliegenden Erfindung eingesetzten Polymere wird nach DIN 55672-1 mittels Gelpermeationschromatographie in Tetrahydrofuran als Eluent und Polystyrol zur Kalibrierung bestimmt. Die Polydispersität (U) = Mw/Mn.

### 2. OHZ

Die hergestellten Polymere besitzen Hydroxylgruppen als Endgruppen. Die Konzentration der OH-Gruppen wird nach DIN 53240-2 titrimetrisch in mgKOH / g Polymer bestimmt.

### 3. Viskosität

Die Viskosität der hergestellten Polymere sowie der Umsetzungsprodukte aus Polymer und Diisocyanat wurde in Anlehnung an die DIN EN ISO 3219 mit einem Rotationsviskosimeter in Pa.s bei der jeweils angegeben Temperatur ermittelt.

### 4. NCO-Zahl

Die NCO-Zahl wurde in Anlehnung an die DIN EN 1242 titrimetrisch in Gew-% ermittelt.

### 5. Säurezahl:

Die Konzentration an Säureendgruppen wird nach DIN EN ISO 2114 titrimetrisch in mg KOH / g Polymer bestimmt.

### Eingesetzte Stoffe:

- DYNACOLL 7360: Hydroxyterminierter kristalliner Polyester mit OHZ 30, Tg = -60 °C und Tm = 55 °C der Fa. Evonik Resource Efficiency GmbH, nachfolgend P1 abgekürzt
- Zn(acac)₂: Zink acetylacetonat-Hydrat (108503-47-5) der Merck
- TYTAN™ TNBT: Titantetra-n-bu tanolat (5593-70-4) der Borica Co., Ltd
- Diethylmalonat (TCI Deutschland GmbH)
- DESMODUR® 44M: 4,4'-Diphenylmethandiisocyanat (der Fa. Covestro)

### Beispiel 1: Herstellung Malonat-haltiger Polyester (P2, nicht erfindungsgemäß)

3991 g von Polyester P1 werden mit 509 g Diethylmalonat und 2,25 g TYTAN™ TNBT als Katalysator in einem 5L Glaskolben mit Destillationsaufsatz unter Stickstoff aufgeschmolzen. Anschließend wurde bei einer Temperatur von 160 °C innerhalb von etwa fünf Stunden entstehendes Ethanol bei Normaldruck abdestilliert. Anschließend wurde bei gleicher Temperatur der Druck in 100 mbar-Schritten auf <10 mbar gesenkt, um nicht reagiertes Diethylmalonat abzudestillieren.

Es wurde ein kristalliner Polyester mit einem Schmelzpunkt (DIN 53765) von 42°C erhalten mit einer Säurezahl <1 mg KOH/g, OHZ von 3,0 mg KOH/g und einem Molekulargewicht von Mn = 3,1 kDa.

Mittels NMR wurde gezeigt, dass vornehmlich die Endgruppen des Polyesters P1 funktionalisiert wurden und nur wenig Kettenverlängerung durch das Diethylmalonat stattfand, sodass der Polyester P2 durch die Malonat-Funktionalität mit einer "hypothetischen OHZ" (dient zur Berechnung der Einwaage der NCO-Komponente bei Folgereaktionen) von 30 charakterisiert wurde.

### Beispiel 2: Herstellung NCO-terminiertes Präpolymer (RHM1, nicht erfindungsgemäß)

In einem 500 ml Planschliffkolben wurden 300g P1 bei 100 °C aufgeschmolzen und für 45 Minuten im Vakuum getrocknet. Danach wurden 37,5 g 4,4'-Diphenylmethandiisocyanat (DESMODUR® 44M - Fa. Covestro; OH:NCO 1:2,2) zugegeben und zügig homogenisiert. Zur vollständigen Umsetzung der Reaktionspartner wurde 45 Minuten bei 100 °C unter Schutzgasatmosphäre gerührt. Anschließend wurde das NCO-terminierte Präpolymer (RHM 1) abgefüllt.

### Beispiel 3: Herstellung RHM 2 (erfindungsgemäß)

In einem 500 ml Planschliffkolben wurden 180 g RHM1 bei 100 °C aufgeschmolzen. Danach wurden 0,03 g Zn(acac)₂ und 20 g P2 zugegeben und zügig homogenisiert. Zur vollständigen Umsetzung der Reaktionspartner wurde 60 Minuten bei 100 °C unter Schutzgasatmosphäre gerührt. Anschließend wurde der Reaktivklebstoff (RHM 2) abgefüllt.

### Beispiel 4: Herstellung RHM 3 (erfindungsgemäß)

In einem 500 ml Planschliffkolben wurden 160g RHM1 bei 100 °C aufgeschmolzen. Danach wurden 0,06 g Zn(acac)₂ und 40 g P2 zugegeben und zügig homogenisiert. Zur vollständigen Umsetzung der Reaktionspartner wurde 60 Minuten bei 100 °C unter Schutzgasatmosphäre gerührt. Anschließend wurde der Reaktivklebstoff (RHM 3) abgefüllt.

### Beispiel 5: Herstellung RHM 4 (nicht erfindungsgemäß)

In einem 500 ml Planschliffkolben wurden 160 g RHM1 bei 100 °C aufgeschmolzen. Danach wurde 40 g P1 zugegeben und zügig homogenisiert. Zur vollständigen Umsetzung der Reaktionspartner wurde 40 Minuten bei 100 °C unter Schutzgasatmosphäre gerührt. Anschließend wurde der Reaktivklebstoff (RHM 4) abgefüllt.

### Beispiel 6: Herstellung RHM 5 (erfindungsgemäß)

In einem 500 ml Planschliffkolben wurden 160 g P1 und 40 g P2 bei 100 °C aufgeschmolzen, 0.06 g Zn(acac)₂ zugegeben und 45 Minuten im Vakuum getrocknet. Danach wurden 28,7 g 4,4'-Diphenylmethandiisocyanat (DESMODUR® 44M - Fa. Covestro; OH+ OH hyp / NCO 1:2,2) zugegeben und zügig homogenisiert. Zur vollständigen Umsetzung der Reaktionspartner wurde 45 Minuten bei 100 °C unter Schutzgasatmosphäre gerührt. Anschließend wurde der Reaktivklebstoff (RHM 5) abgefüllt.

### Beispiel 7: Herstellung RHM 6 (erfindungsgemäß)

In einem 500 ml Planschliffkolben wurden 300 g P2 bei 100 °C aufgeschmolzen, 0,45 g Zn(acac)₂ zugegeben und 45 Minuten im Vakuum getrocknet. Danach wurden 44 g 4,4'-Diphenylmethandiisocyanat (DESMODUR® 44M - Fa. Covestro; OH hyp / NCO 1:2,2) zugegeben und zügig homogenisiert. Zur vollständigen Umsetzung der Reaktionspartner wurde 180 Minuten bei 100 °C unter Schutzgasatmosphäre gerührt. Anschließend wurde der Reaktivklebstoff (RHM 6) abgefüllt.

Alle RHM wurden bzgl. der mechanischen Eigenschaften und Wärmestandfestigkeit bewertet. Für die Bestimmung der mechanischen Eigenschaften anhand der Zugfestigkeit nach DIN 53504 wurden Filme mit einer Schichtdicke von ca. 0,5 mm aus dem RHM gezogen und diese für 2 Wochen (W) bei 20 °C bei 65% rel. Luftfeuchtigkeit gelagert. Für die Bestimmung der Wärmestandfestigkeit wurden zwei Buchenholzsubstrate mit einer Länge von 100 mm, einer Breite von 20 mm und einer Dicke von 5 mm in Form eines "T" überlappend verklebt. Die verklebte Fläche betrug 400 mm², die Klebstoffdicke ca. 0,2 mm. Die verklebten Prüfkörper wurden unter gleichen Bedingungen im Klimaschrank gelagert. Anschließend wurde der verklebte Probekörper in ein Gestell eingesetzt, an den langen Schenkel des verklebten Probekörpers wurde ein Gewicht von 400 g gehängt und unter definierten Bedingungen in einem Wärmeschrank bis zum Versagen der Verklebung aufgeheizt. In einem Vorversuch wird die Messung bei einer Temperatur von 50 °C gestartet und dann schrittweise nach jeweils 20 Minuten um 10 °C solange erhöht, bis die Verklebung sich löst und das Gewicht zu Boden fällt. Im Hauptversuch wird die Messung 20 °C unterhalb der höchsten Temperatur des Vorversuchs gestartet, bei der die Verklebung noch gehalten hat. Die Temperatur wird schrittweise nach jeweils 20 Minuten um 5 °C erhöht, bis sich die Verklebung löst und das Gewicht zu Boden fällt. Die Wärmestandfestigkeit ist die höchste Temperatur des Hauptversuchs, bei der die Verklebung noch hält. Die Ergebnisse der Ausprüfungen sind Tabelle 2 zu entnehmen.

**Tabelle 2: Ergebnisse der Ausprüfung der reaktiven Schmelzklebstoffe (RHM) 1 bis 6**

| | RHM 1 | RHM 2 | RHM 3 | RHM 4 | RHM 5 | RHM 6 |
|---|---|---|---|---|---|---|
| NCO-Zahl (%) | 2,4 | 1,8 | 1,4 | 1,5 | 2,4 | 2,2 |
| Zugfestigkeit bei 23 °C (N/mm²) | 21 | 18 | 15 | 12 | 15 | 9 |
| | | | | | | |
| Wärmestandfestigkeit (°C) | > 200 | 175 | 150 | 180 | 175 | 90 |

Es zeigt sich deutlich, dass mit steigendem Anteil Malonat die Wärmestandfestigkeit der ausgehärteten PU-Klebstoffe deutlich herabgesetzt wird. Die mechanischen Eigenschaften vor thermischer Belastung sind hingegen ausreichend hoch.

## Patentansprüche

1. Zusammensetzung, enthaltend ein Polymer der Formel
Q-(O-C(O)-CR'R"-C(O)-R¹)ₓ (I)
mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren,
x größer-gleich 1, vorzugsweise 1 bis 100, bevorzugt 2 bis 20, besonders bevorzugt 3 bis 10,
R¹ = R² oder O-R³,
R² = Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen,
R³ = Kohlenwasserstoffrest, der mit Halogenatomen substituiert sein kann, mit 1 bis 10 Kohlenstoffatomen, vorzugsweise mit 1 bis 7 Kohlenstoffatomen und bevorzugt mit 1 bis 4 Kohlenstoffatomen, oder Polymerrest, vorzugsweise ausgewählt aus Polyester- oder Polyolefinrest, bevorzugt ein Polymerrest, der keine Bausteine enthält, die aus der Verwendung von (Meth)acrylsäure-Einheiten aufweisenden Molekülen als Monomere resultieren,
R' = -H, Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, oder ein Rest der Formel (II),
-C(O)-NH-Q' (II)
mit
Q' = organischer Rest, der auch ein oder mehrere Silizium-Atome aufweisen kann, vorzugsweise organischer Rest, der ein oder mehrere -C(O)-NH-Bausteine, -N=C=O Reste oder Reste der Formel (V) aufweist, und bevorzugt Polyester- und/oder Polyolefinrest, der ein oder mehrere -C(O)-NH-Bausteine oder -N=C=O Reste oder Reste der Formel (V) aufweist, 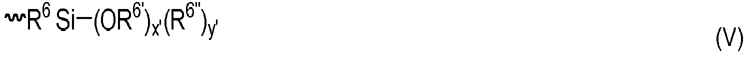 mit R⁶, gleich Kohlenwasserstoffrest, der auch Stickstoff, Schwefel und/oder Sauerstoff aufweisen kann, R^{6'} und R^{6"} gleiche oder verschiedene, gesättigte Kohlenwasserstoffreste, vorzugsweise lineare Kohlenwasserstoffreste, vorzugsweise mit 1 bis 18 Kohlenstoffatomen, bevorzugt mit 1 bis 3 Kohlenstoffatomen, und x' = 0 bis 3, y' = 0 bis 3, mit der Maßgabe, dass x' + y' = 3 ist, und wobei die geschwungene Linie eine kovalenten Bindung zum Stickstoff darstellt, wobei x' >= 2 und y' <= 1 bevorzugt und x' = 3 und y' = 0 besonders bevorzugt ist,
R" = -H oder ein Rest der Formel (II),
mit der Maßgabe, dass wenn keiner der Reste R' und R" ein Rest der Formel (II) ist, mindestens einer der Reste R' oder R" -H ist.

2. Zusammensetzung nach Anspruch 1, **dadurch gekennzeichnet, dass** keiner der Reste R' und R" im Polymer der Formel (I) der Formel (II) entspricht und in der Zusammensetzung eine Verbindung der Formel (III)
O=C=N-Q' (II)
mit Q' wie oben definiert, vorzugsweise Q' ein Polyolefin- und/oder Polyester-Rest, enthalten ist.

3. Zusammensetzung nach Anspruch 1 oder 2, **dadurch gekennzeichnet, dass** Q ein Polyesterrest ist, der bevorzugt auf Di- und/oder Polysäuren und Di- und/oder Polyolen basiert.

4. Zusammensetzung nach einem der Ansprüche 1 bis 3, **dadurch gekennzeichnet, dass** Q ein Polyesterrest ist, der auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol, ganz besonders bevorzugt auf Adipinsäure und Hexandiol basiert.

5. Zusammensetzung nach einem der Ansprüche 1 bis 4, **dadurch gekennzeichnet, dass** R³ ein Polyesterrest ist, der bevorzugt auf Di- und/oder Polysäuren und Di- und/oder Polyolen, besonders bevorzugt auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol, ganz besonders bevorzugt auf Adipinsäure und Hexandiol basiert.

6. Zusammensetzung nach einem der Ansprüche 1 bis 5, **dadurch gekennzeichnet, dass** mindestens einer der Reste R' und R" im Polymer der Formel (I) der Formel (II) entspricht und in der Zusammensetzung zusätzlich eine Verbindung der Formel (III)
O=C=N-Q' (III)
mit Q' wie oben definiert, vorzugsweise mit Q' ein Polyolefin- und/oder Polyester-Rest, enthalten ist.

7. Zusammensetzung nach einem der Ansprüche 1 bis 5, **dadurch gekennzeichnet, dass** mindestens einer der Reste R' und R" im Polymer der Formel (I) der Formel (II) entspricht und in der Zusammensetzung keine Verbindung der Formel (III)
O=C=N-Q' (III)
mit Q' wie oben definiert, vorzugsweise mit Q' ein Polyolefin- und/oder Polyester-Rest, enthalten ist.

8. Verfahren zur Herstellung einer Zusammensetzung gemäß einem der Ansprüche 1 bis 7, **dadurch gekennzeichnet, dass** ein Polymer der Formel (la),
Q-(O-C(O)-CR'R"-C(O)-R¹)ₓ (la)
mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren,
x größer-gleich 1, vorzugsweise 1 bis 100, bevorzugt 2 bis 20, besonders bevorzugt 3 bis 10,
R¹ = R² oder O-R³,
R² = Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen,
R³ = Kohlenwasserstoffrest, der mit Halogenatomen substituiert sein kann, mit 1 bis 10 Kohlenstoffatomen, vorzugsweise mit 1 bis 7 Kohlenstoffatomen und bevorzugt mit 1 bis 4 Kohlenstoffatomen, oder Polymerrest, vorzugsweise ausgewählt aus Polyester- oder Polyolefinrest, bevorzugt ein Polymerrest, der keine Bausteine enthält, die aus der Verwendung von (Meth)acrylsäure-Einheiten aufweisenden Molekülen als Monomere resultieren,
R' = -H, Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, oder ein Rest der Formel (II),
-C(O)-NH-Q' (II)
mit
Q' = organischer Rest, der auch ein oder mehrere Silizium-Atome aufweisen kann, vorzugsweise organischer Rest, der ein oder mehrere -C(O)-NH-Bausteine, -N=C=O Reste oder Reste der Formel (V) aufweist, und bevorzugt Polyester- und/oder Polyolefinrest, der ein oder mehrere -C(O)-NH-Bausteine oder -N=C=O Reste oder Reste der Formel (V) aufweist, 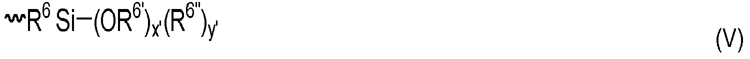 mit R⁶, gleich Kohlenwasserstoffrest, der auch Stickstoff, Schwefel und/oder Sauerstoff aufweisen kann, R^{6'} und R^{6"} gleiche oder verschiedene, gesättigte Kohlenwasserstoffreste, vorzugsweise lineare Kohlenwasserstoffreste, vorzugsweise mit 1 bis 18 Kohlenstoffatomen, bevorzugt mit 1 bis 3 Kohlenstoffatomen, und x' = 0 bis 3, y' = 0 bis 3, mit der Maßgabe, dass x' + y' = 3 ist, und wobei die geschwungene Linie eine kovalenten Bindung zum Stickstoff darstellt, wobei x' >= 2 und y' <= 1 bevorzugt und x' = 3 und y' = 0 besonders bevorzugt ist,
mit der Maßgabe, dass mindestens einer der Reste R' und R" = -H ist,
mit einer Verbindung der Formel (III)
O=C=N-Q' (III)
mit Q' wie oben definiert, vorzugsweise Q' ein Polyolefin- und/oder Polyester-Rest, vermischt wird.

9. Verfahren nach Anspruch 8, **dadurch gekennzeichnet, dass** jeweils so viel des Polymeren der Formel (I) und der Verbindung der Formel (III) eingesetzt werden, dass das Verhältnis von Resten R' und R", die -H sind, zu Resten O=C=N- der Verbindung (III) von 20 zu 1 bis 1 zu 20 beträgt.

10. Verfahren nach einem der Ansprüche 8 oder 9, **dadurch gekennzeichnet, dass** eine organische Zink-Verbindung, bevorzugt Zn(acac)₂, als Katalysator zugesetzt wird.

11. Verfahren nach einem der Ansprüche 8 bis 10, **dadurch gekennzeichnet, dass** das Mischen bei einer Temperatur von größer 70 °C, bevorzugt bei einer Temperatur von 85 bis 160 °C erfolgt.

12. Verfahren nach mindestens nach einem der Ansprüche 8 bis 11, **dadurch gekennzeichnet, dass** das Mischen unter Schutzgasatmosphäre, bevorzugt über eine Zeitraum von 0,1 bis 180 Minuten, bevorzugt 15 bis 150 Minuten durchgeführt wird.

13. Verfahren nach mindestens nach einem der Ansprüche 8 bis 12, **dadurch gekennzeichnet, dass** das Mischen in der Schmelze durchgeführt wird.

14. Verwendung von Zusammensetzungen nach einem der Ansprüche 1 bis 7 zur Verklebung von Substraten und in sowie als Kleb-/ Dichtstoffe(n) und Beschichtungsmaterial.

15. Verwendung gemäß Anspruch 14, **dadurch gekennzeichnet dass** es sich bei der Verklebung um eine Verklebung handelt, die durch eine Wärmebehandlung mit einer Temperatur von 50 bis kleiner 200 °C, bevorzugt 100 bis 190 °C, lösbar ist.
